# EUROPÄISCHE PATENTSCHRIFT

(11) **EP 0 598 350 B1**
(45) Veröffentlichungstag und Bekanntmachung des Hinweises auf die Patenterteilung: **12.08.1998**
(21) Anmeldenummer: 93118322.2
(22) Anmeldetag: 12.11.1993
(51) Int. Cl.: E04B 2/72, F16B 5/02

(54) **Verbindungsanordnung zur Bildung einer Gehäusewand mit in Strangpresstechnik hergestellten Wandelementen**
Connection arrangement for forming a housing wall with extruded wall elements
Dispositif de connexion pour former une paroi de boîtier avec éléments de paroi extrudés

(30) Priorität: 14.11.1992 DE 9215529 U
(43) Veröffentlichungstag der Anmeldung: 25.05.1994
(73) Patentinhaber: Mannesmann VDO AG, 60326 Frankfurt (DE); ALUMINIUM-WERKE WUTÖSCHINGEN GmbH, D-79793 Wutöschingen (DE)
(72) Erfinder: Schuh, Eduard, D-78048 Villingen-Schwenningen (DE); Gundel, Walter, Dipl.-Ing., D-78052 Villingen-Schwenningen (DE); Schanz, Waldemar-Josef, D-79793 Wutöschingen (DE)

(56) Entgegenhaltungen:
- FR-A- 2 352 195
- US-A- 1 957 933
- US-A- 2 976 970
- US-A- 3 267 631

## Beschreibung

Die Erfindung betrifft eine Verbindungsanordnung zur Bildung einer Gehäusewand, mit in Strangpresstechnik hergestellten Wandelementen, welche sich gegenseitig überlappend zusammengefügt sind.

Eine Anordnung zur Bildung einer Wand aus mit Abstand einander zugeordneten Platten zeigt die US-A 2 976 970.

Gehäuse, beispielsweise für Tanksäulen, Parkscheinautomaten, freistehende Briefkästen und Wertzeichengeber, Kassen für Parkareale und dergleichen, sind in der Regel aus Stahlblechteilen aufgebaut, die durch Schweißen oder Nieten miteinander verbunden sind. Diese Bauweise erfordert für die übliche Aufstellung solcher Einrichtungen im Freien ein hohes Maß an Korrosionsschutz und bietet bezüglich der äußeren Form nur einen geringen Gestaltungsspielraum. Außerdem ist der Montage- und Fertigungsaufwand erheblich, da abgesehen von Biegearbeiten und der erwähnten Verbindungstechnik Scharniere für Türen, Schienen bzw. Leisten für Einschübe und dergleichen angebracht werden müssen und bei Gehäusen für selbstkassierende Automaten Blechstärken zu verarbeiten sind, die Spezialmaschinen erforderlich machen und die Handhabung und den Transport der Gehäuseteile und Gehäuse aufgrund des relativ hohen Gewichtes erschweren.

Derartige Fertigungs-, Montage und Korrosionsprobleme bestehen nicht, wenn für das vorgesehene Einsatzgebiet Aluminium als Gehäusematerial verwendet wird. Da eine gießtechnische Herstellung wegen der Größe und des Materialverbrauchs in den meisten Fällen nicht in Frage kommt, bietet es sich an, ein derartiges Gehäuse bzw. dessen Seitenwände als Hohlprofil im Stranggußverfahren herzustellen. Im allgemeinen sind jedoch Breite und Tiefe der Gehäuse zu groß, als daß ein einziges Strangpressprofil hergestellt und von diesem Gehäusekörper abgelängt werden könnten. Werden außerdem unterschiedlich breite und tiefe Gehäuse benötigt, so bietet es sich an, die Gehäuse bzw. die Gehäusewände aus Wandelementen zusammenzusetzen, die in Strangpresstechnik hergestellt sind. Diese bieten ebenfalls den Vorteil, in beliebiger Länge und ohne Nachbearbeitung zur Verfügung zu stehen und gestatten, bei entsprechender Ausbildung eine vielfältige äußere Gestaltung gegebenenfalls Strukturierung des zu erstellenden Gehäuses. Von Nachteil sind andererseits die bei der Strangpresstechnik unvermeidlichen, relativ groben Toleranzen und die Tatsache, daß durch das Zusammenfügen von Wandelementen die Stabilität und die Dichtigkeit des Gehäuses in Frage gestellt ist.

Die Aufgabe der Erfindung besteht somit darin, eine von Herstellungstoleranzen weitgehend unabhängige Verbindungsanordnung zu schaffen, mit der es bei einem geringen Montageaufwand und guter Reproduzierbarkeit möglich ist, aus Wandelementen, die als Strangpressprofile hergestellt sind, eine Gehäusewand bzw. ein Gehäuse zusammenzufügen, das an den Verbindungsstellen eine ausreichende Stabilität und Dichtigkeit aufweist.

Gelöst wird diese Aufgabe erfindungsgemäß dadurch, daß im Bereich einer Überlappung der Wandelemente an einem Wandelement parallel zu dem streifenförmigen Überlappungsbereich eine einen Gewindekanal einschließende Schiene angeformt ist, daß ein u-förmig profiliertes und mit wenigsten einer Durchgangsbohrung versehenes Klemmstück vorgesehen ist, dessen lichte Weite größer ist als die Breite der Schiene und daß die zu verbindenden Wandelemente derart zusammengefügt sind, daß beim Festspannen des Klemmstücks mittels einer in den Gewindekanal durchgreifenden Schraube das Klemmstück sich über die an ihm angeformten Schenkel auf beiden Wandelementen abstützt, wobei an einem Wandelement, bezogen auf die Gehäusewand einerseits eine außen überlappende Leiste und andererseits eine innen überlappende Leiste ausgebildet ist, wobei die den Gewindekanal tragende Schiene an der Innenseite unmittelbar parallel zur außen überlappenden Leiste angeformt ist.

Vorteilhafte Ausbildungen beschreiben die Unteransprüche.

Die gefundene Lösung ermöglicht, abgesehen vom Vorzug der Lösbarkeit, eine spezifische Verbindung von als Strangpressprofile hergestellten Wandelementen, das heißt die bei Strangpressprofilen üblichen, relativ großen Toleranzabweichungen lassen sich während des Zusammenbaus ausgleichen, in dem bei noch loser Verschraubung aufgrund der Riffelung eine gut kontrollierbare Lageveränderung vorgenommen werden kann, die durch Anziehen der Verschraubung sofort fixierbar ist. Dabei ist für die Verschraubung ein in der Strangpresstechnik an sich bekannter Gewindebzw. Schraubkanal vorgesehen und unmittelbar parallel zu dem streifenförmigen Verbindungsbereich zweier Wandelemente angeformt, so daß für die Gewindeausbildung kein zusätzlicher Fertigungsaufwand erforderlich ist und gleichzeitig im Verbindungsbereich eine Versteifung des betreffenden Wandelementes gegeben ist. Mit der Riffelung der überlappenden Flächen wird darüber hinaus eine formschlüssige und wenigstens staubdichte Verbindung erzielt.

Vorteilhaft ist ferner, daß das als Kraftleiter dienende Klemmstück die über eine oder mehrere Schrauben eingeleiteten Verbindungskräfte großflächig und gezielt verteilt und in Bezug auf den Gewindekanal gleichzeitig als Sicherungselement dient, in dem bei hohen Anzugskräften oder enger Toleranzlage ein Aufweiten des Schraubkanals begrenzt wird. Da die Toleranzen unkritisch sind, lassen sich die Klemmstücke ebenfalls aus Strangpressprofilen ablängen. Erwähnt sei außerdem, daß das brückenförmige Aufliegen des Klemmstücks eine gewisse elastische Verformbarkeit ermöglicht und somit die Anpresskraft leichter einstellbar ist und ein Selbstsicherungseffekt bezüglich der Verschraubung gegeben ist. Durch die Ausnützung der strangpresstechnisch herstellbaren Verbindungsmittel ergibt sich ein äußerst geringer Montageaufwand und eine Montierbarkeit mit einfachen Werkzeugen. Daß die Verschraubung bezogen auf eine Gehäusewand von außen unsichtbar ist, ist ein weiterer Vorzug der gefundenen Verbindungsanordnung. Außerdem sind die Klemmstücke entlang des Profils beliebig anbringbar, so daß Einbauten innerhalb eines Gerätes problemlos berücksichtigt werden können.

Im folgenden sei die Erfindung anhand von Zeichnungen näher erläutert. Es zeigen:
Figur 1 eine Schemaskizze der erfindungsgemäßen Verbindungsanordnung.
Figur 2 ein Ausführungsbeispiel der erfindungsgemäßen Verbindungsanordnung im Schnitt.
Figur 3 eine Ansicht des Ausführungsbeispiels gemäß Figur 2 in Pfeilrichtung A.

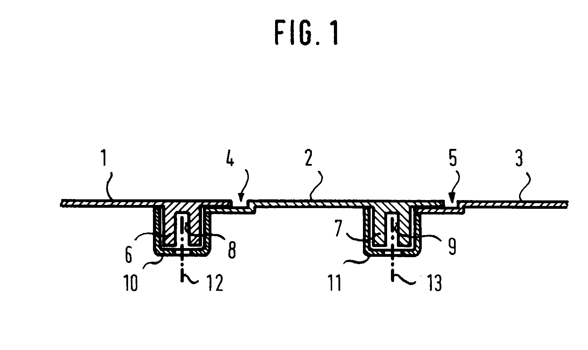

Bei der Schemaskizze Figur 1 sind mehrere gleichgestaltete Wandelemente 1, 2 und 3 zusammengefügt, und zwar derart, daß eine ebenflächige Wand gebildet wird, an welcher durch eine geeignete Ausbildung der Wandelemente 1, 2, 3 Fugen 4 und 5 freigestellt sind, die einer gewissen Strukturierung und einem optischen Kaschieren von Toleranzen dienen können. An jedem Wandelement ist eine Schiene 6, 7 angeformt, welche einen Gewindekanal 8, 9 einschließt, an dessen gegenüberliegenden Wänden jeweils ein um eine halbe Steigung versetztes Gewindeprofil ausgebildet ist. Mit 10, 11 sind u-förmige Klemmstücke bezeichnet, die mittels symbolisch dargestellter Schrauben 12, 13 mit den Schienen 6, 7 verbunden sind. Dabei stützen sich die Klemmstücke 10, 11 jeweils auf zwei Wandelementen ab.

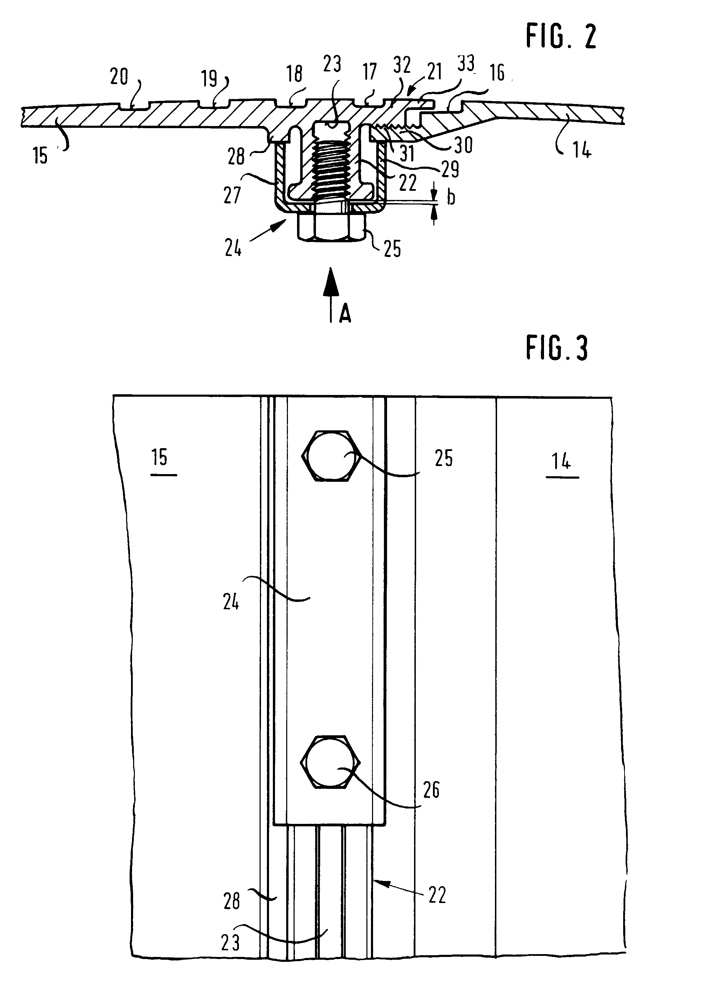

Das Ausführungsbeispiel Figur 2 entspricht dem Bauprinzip gemäß Figur 1, wobei die als Aluminium-Strangpressprofile hergestellten Wandelemente 14, 15 entsprechend der äußeren Gestaltung eines mit solchen Wandelementen gebildeten Gehäuses gewölbt ausgebildet und parallel zu einer Toleranzen kaschierenden Fuge 16 genutet 17, 18, 19, 20 sind. Auf diese Weise wird die Verbindungsstelle 21 optisch weitgehend kaschiert und gleichzeitig ein ausdrucksstarker ästhetischer Effekt erzielt. Wie aus Figur 2 ferner ersichtlich ist, ist an dem Wandelement 15 parallel zum Überlappungsbereich der beiden Wandelemente 14 und 15 bzw. zu dem über die gesamte Länge der Wandelemente 14, 15 sich erstreckenden Verbindungsbereich 21 eine t-förmige Schiene 22 angeformt, in welcher ein Gewindekanal 23 ausgebildet ist. Ein die Schiene 22 bzw. deren t-förmig verbreiterter Teil mit geringem Spiel umgreifendes Klemmstück 24 stützt sich beim Anziehen der Schrauben 25 und 26 unter Beibehaltung eines Abstandes b zwischen der Stirnfläche der Schiene 22 und dem Klemmstück 24 auf beiden Wandelementen 14 und 15 ab. Das heißt, der eine Schenkel 27 des Klemmstücks 24 liegt auf einer am Wandelement 15 angeformten Rippe 28 auf, während der andere Schenkel 29 mit einer am Wandelement 14 angeformten, nach innen versetzten Leiste 30 zusammenwirkt. Dabei geht die an der Leiste 30 ausgebildete, nach außen weisende Riffelung 31 in Eingriff mit einer gleichgestalteten, an einer am Wandelement 15 ausgebildeten Leiste 32 vorgesehenen Riffelung, die nicht näher bezeichnet ist.

Der Vollständigkeit halber sei noch erwähnt, daß im Verbindungs- bzw. Überlappungsbereich 21 an der Leiste 32 eine Lippe 33 derart ausgebildet ist, daß sie einerseits der durch die Nute 17, 18, 19, 20 gebildeten Struktur entspricht, andererseits als Blende wirkt, so daß der Spalt zwischen der Fuge 16 und der tiefer liegenden Riffelung 31, auch wenn größere Toleranzen auszugleichen sind, nicht sichtbar wird.

## Patentansprüche

1. Verbindungsanordnung zur Bildung einer Gehäusewand, mit in Strangpresstechnik hergestellten Wandelementen (14, 15), welche sich gegenseitig überlappend zusammengefügt sind,
**dadurch gekennzeichnet,**
daß im Bereich einer Überlappung der Wandelemente (14, 15) an einem Wandelement (15) parallel zu dem streifenförmigen Überlappungsbereich (21) eine einen Gewindekanal (23) einschließende Schiene (22) angeformt ist, daß ein u-förmig profiliertes und mit wenigstens einer Durchgangsbohrung versehenes Klemmstück (24) vorgesehen ist, dessen lichte Weite größer ist als die Breite der Schiene (22), und daß die zu verbindenden Wandelemente (14, 15) derart zusammengefügt sind, daß beim Festspannen des Klemmstücks (24) mittels einer in den Gewindekanal (23) durchgreifenden Schraube (25, 26) das Klemmstück (24) sich über die an ihm angeformten Schenkel (27, 29) auf beiden Wandelementen (14, 15) abstützt, wobei an einem Wandelement (15), bezogen auf die Gehäusewand, einerseits eine außen überlappende Leiste (32) und andererseits eine innen überlappende Leiste (30) ausgebildet ist, wobei die den Gewindekanal (23) tragende Schiene (22) an der Innenseite unmittelbar parallel zur außen überlappenden Leiste (32) angeformt ist.

2. Anordnung nach Anspruch 1,
**dadurch gekennzeichnet,**
daß die miteinander verspannten Flächen der Wandelemente (14, 15) mit jeweils einer Riffelung (31) versehen sind.

3. Anordnung nach Anspruch 1,
**dadurch gekennzeichnet,**
daß die Schiene (22) t-förmig ausgebildet ist und daß die lichte Weite des Klemmstücks (24) nur wenig größer ist als die größte Breite der Schiene (22).

4. Anordnung nach Anspruch 1,
**dadurch gekennzeichnet,**
daß für einen Überlappungsbereich (21) mehrere Klemmstücke (24) vorgesehen sind.

5. Anordnung nach Anspruch 1,
**dadurch gekennzeichnet,**
daß mittels den für das Anbringen der Klemmstücke (24) dienenden Schrauben (25 bzw. 26) zusätzlich Verkleidungen, Konsolen und dergleichen befestigbar sind.

## Claims

1. A connection arrangement for forming a housing wall, having wall elements (14, 15) which are manufactured by extrusion and are joined together such that they are mutually overlapping,
**characterized in that**
in the region where the wall elements (14, 15) overlap, a rail (22) enclosing a threaded channel (21) is integrally formed on a wall element (15) parallel to the strip-shaped overlapping region (21), in that a clamping piece (24) is provided which has a U-shaped profile, at least one through-bore and an inside width which is greater than the width of the rail (22), and in that the wall elements (14, 15) to be connected are joined together in such a way that, when the clamping piece (24) is tensioned by means of a screw (25, 26) reaching through into the threaded channel (23), the clamping piece (24) is supported on both wall elements (14, 15) by way of the limbs (27, 29) which are integrally formed on it, in which arrangement, with respect to the housing wall an outwardly overlapping strip (32) on the one hand and an inwardly overlapping strip (30) on the other are constructed on a wall element (15), the rail (22) containing the threaded channel (23) being integrally formed on the inside, directly parallel to the outwardly overlapping strip (32).

2. An arrangement according to Claim 1,
**characterized in that**
those areas of the wall elements (14, 15) which are tensioned against each other are in each case provided with grooves (31).

3. An arrangement according to Claim 1,
**characterized in that**
the rail (22) is of a T-shaped construction and the inside width of the clamping piece (24) is only slightly greater than the greatest width of the rail (22).

4. An arrangement according to Claim 1,
**characterized in that**
a plurality of clamping pieces (24) are provided for one overlapping region (21).

5. An arrangement according to Claim 1,
**characterized in that**
casings, brackets and the like may be fixed in addition by means of screws (25 and 26) serving to mount the clamping pieces (24).

## Revendications

1. Dispositif d'assemblage pour la réalisation d'une paroi de carrosserie, avec des éléments de paroi (14, 15) fabriqués selon la technique de filage qui sont assemblés en se chevauchant mutuellement,
caractérisé par le fait
que, dans la zone d'un chevauchement desdits éléments de paroi (14, 15), une barre (22) englobant un canal fileté (23) est formée sur un élément de paroi (15) parallèlement à la zone de chevauchement lamellaire (21), qu'il est prévu un élément de serrage (24) profilé en U, pourvu d'au moins un alésage de passage et dont la largeur intérieure est supérieure à la largeur de la barre (22) et que les éléments de paroi à assembler (14, 15) sont réunis de telle sorte que, lors du blocage de l'élément de serrage (24) au moyen d'une vis (25, 26) traversant le canal fileté (23), ledit élément de serrage (24) s'appuie, par l'intermédiaire des branches (27, 29) formées sur lui, sur les deux éléments de paroi (14, 15), un élément de paroi (15) étant doté, d'une part, d'une nervure (32) chevauchant, par rapport à la paroi de carrosserie, à l'extérieur et, d'autre part, d'une nervure (30) chevauchant à l'intérieur, la barre (22) portant le canal fileté (23) étant formée sur la face intérieure directement en parallèle à la nervure (32) chevauchant à l'extérieur.

2. Dispositif selon la revendication 1,
caractérisé par le fait
que les surfaces des éléments de paroi (14, 15), serrées ensemble, sont respectivement pourvues d'une cannelure (31).

3. Dispositif selon la revendication 1,
caractérisé par le fait
que la barre (22) est réalisée en forme de T et que la largeur intérieure de l'élément de serrage (24) n'est que légèrement plus grande que la plus grande largeur de ladite barre (22).

4. Dispositif selon la revendication 1,
caractérisé par le fait
que pour une zone de chevauchement (21) ont été prévus plusieurs éléments de serrage (24).

5. Dispositif selon la revendication 1,
caractérisé par le fait
que, au moyen des vis (25 ou 26) servant au montage des éléments de serrage (24), il est, en plus, possible de fixer, des revêtements, consoles et autres éléments analogues.
